(19) Europäisches Patentamt
European Patent Office
Office européen des brevets

(11) **EP 4 195 029 A1**

(12) **EUROPEAN PATENT APPLICATION**

(43) Date of publication:
**14.06.2023 Bulletin 2023/24**

(21) Application number: **22204889.4**

(22) Date of filing: **01.11.2022**

(51) International Patent Classification (IPC):
**G06F 7/72** *(2006.01)*

(52) Cooperative Patent Classification (CPC):
**G06F 7/722; G06F 7/723**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **09.12.2021 US 202163287896 P**
**23.09.2022 US 202217952085**

(71) Applicant: **INTEL Corporation**
**Santa Clara, CA 95054 (US)**

(72) Inventors:
- **GRIBOK, Sergey**
  **Santa Clara, 95054 (US)**
- **Pasca, Bogdan**
  **Santa Clara, 95054 (US)**
- **Langhammer, Martin**
  **Santa Clara, 95054 (US)**

(74) Representative: **Goddar, Heinz J.**
**Boehmert & Boehmert**
**Anwaltspartnerschaft mbB**
**Pettenkoferstrasse 22**
**80336 München (DE)**

(54) **HIGH PERFORMANCE SYSTEMS AND METHODS FOR MODULAR MULTIPLICATION**

(57) A circuit system for performing modular reduction of a modular multiplication includes multiplier circuits that receive a first subset of coefficients that are generated by summing partial products of a multiplication operation that is part of the modular multiplication. The multiplier circuits multiply the coefficients in the first subset by constants that equal remainders of divisions to generate products. Adder circuits add a second subset of the coefficients and segments of bits of the products that are aligned with respective ones of the second subset of the coefficients to generate sums.

FIG. 2A

**Description**

CROSS REFERENCE TO RELATED APPLICATION

This patent application claims the benefit of U.S. provisional patent application number 63/287,896, filed December 9, 2021, which is incorporated by reference herein in its entirety.

FIELD OF THE DISCLOSURE

The present disclosure relates to electronic circuit systems, and more particularly, to high performance systems and methods for modular multiplication.

BACKGROUND

Decentralized blockchains have become common across many applications systems. One method for making decentralized blockchains more resistant to hacking involves using verifiable delay functions (VDFs). VDFs are complex functions that take a large quantity of operations to compute, but that use a relatively small number of operations to verify. The operations computed by VDFs typically cannot be parallelized.

BRIEF DESCRIPTION OF THE DRAWINGS

Figure 1 is a diagram that illustrates examples of calculations that can be performed for modular multiplication to generate partial products for a degree-4 polynomial.

Figure 2A is a diagram that illustrates an example of a system for performing modular reduction of partial product output terms using rows of digital signal processing (DSP) circuits and column based additions.

Figure 2B is a diagram that illustrates a digital signal processing row that is an example of each of the DSP rows in Figure 2A and adder circuits.

Figure 3A is a diagram that illustrates another example of a system for performing modular reduction of partial product output terms using rows of digital signal processing (DSP) circuits having input adders and column based additions.

Figure 3B is a diagram that illustrates a digital signal processing (DSP) row that is an example of each of the DSP rows of FIG. 3A and adder circuits.

Figure 4 is a diagram that illustrates an example of a system for performing modular exponentiation having input multiplexers between the upper and lower halves of the system.

Figure 5 illustrates an example of a system for performing multiplicative expansion for a squaring operation in modular exponentiation that generates partial products that are each represented by three segments of bits.

Figure 6 illustrates an example of a system for performing multiplicative expansion for a squaring operation in modular exponentiation that generates partial products that are each represented by two segments of bits.

Figure 7 is a diagram that illustrates an example of a system that uses multiplicative expansion using digital signal processing (DSP) blocks and registers for a squaring operation.

Figure 8 is a diagram of an illustrative example of a programmable logic integrated circuit (IC) that can be configured to implement any one or more of the systems disclosed herein.

DETAILED DESCRIPTION

One example of a variable delay function (VDF) is a modular exponentiation of an input that uses repeated modulo squaring or multiplication as a core function. Modular exponentiation, especially for very large integers of hundreds or thousands of bits, is a commonly used function in cryptography. If very large word sizes are used, the algorithm for modular exponentiation is complex and may require many operations or a large amount of logic circuits. In most applications, the calculations for performing the algorithm for modular exponentiation requires multiple clock cycles to complete. However, blockchain algorithms have recently required very low-latency implementations of modular multiplications.

The definition of a generic modular multiplication is provided in equation (1) below, where **A,** B, and N are input numbers, and the output Q equals the result of a modulo (mod) operation (i.e., the reminder of the division of A times B divided by N). Equation (2) below shows the modular exponentiation, which is comprised of multiple modular multiplications, and where R equals the result of a modulo (mod) operation (i.e., the remainder of the division of $C^E$ divided by N).

$$Q = AB \bmod N \qquad (1)$$

$$R = C^E \bmod N \qquad (2)$$

The modular exponentiation right-to-left algorithm used for computing the expression in equation (2) iterates over the bits of the exponent E from right (least significative bit) to left (most significative bit). When the scanned bit for E is '1', two modular multiplications are performed, as opposed to a single modular multiplication when the scanned bit for E is '0'. The base C in equation (2) is squared on the first iteration, and the output of each modular multiplication is then squared on each successive modular multiplication.

Multiplier circuits are expensive, in both circuit area and performance time. Field programmable gate array (FPGA) integrated circuits have many embedded multiplier circuits. Many VDF functions require multiplying very large numbers, e.g., having 1000 bits. The multiplier circuits in an FPGA typically have far fewer than 1000 inputs. Therefore, one multiplier circuit in an FPGA cannot by itself multiply a multiplicand or multiplier having 1000 bits. A large multiplier circuit can be constructed by assembling many smaller multipliers. For example, a 1000 bit multiplier may use well over 1000 digital signal processing (DSP) blocks in an FPGA. Many previously known multiplication algorithms require considerable amounts of pre-processing and post-processing in the form of additions and subtractions that add many layers of calculations to the multiplication, which greatly increases latency.

Modular multiplication can also be performed by applying modular reduction directly to a single multiplication. According to this technique, the multiplication is never completed, because the modular reduction operates on sums of groups of many smaller multipliers that comprise a larger multiplier. In this technique, the direct assembly of a large multiplier from smaller multiplier components is implemented by a polynomial multiplication method. The input numbers A and B in equation (1) above are $(d + 1)w$-bit wide unsigned integers, and are initially viewed as $(d + 1)$ radix $R = 2^w$ digits. A and B are defined below in equations (3) and (4), respectively, according to the polynomial multiplication method.

$$A = \sum_{i=0}^{d} A_i 2^{wi} \qquad (3)$$

$$B = \sum_{i=0}^{d} B_i 2^{wi} \qquad (4)$$

From the radix-R digit notation, the polynomial notation ($x = 2^w$) can be expressed for *A(x) and B(x)* as shown in equations (5) and (6), respectively, below. In equations (5) and (6), $a_i$ and $b_i$ are the coefficients of the polynomials that correspond to the radix-R digits from the original representation shown in equations (3) and (4). Equations (7) and (8) are degree-4 (i.e., $d = 4$) polynomials for A and B, respectively.

$$A(x) = \sum_{i=0}^{d} a_i x^i \qquad (5)$$

$$B(x) = \sum_{i=0}^{d} b_i x^i \qquad\qquad (6)$$

$$A = a_4 x^4 + a_3 x^3 + a_2 x^2 + a_1 x^1 + a_0 x^0 \qquad\qquad (7)$$

$$B = b_4 x^4 + b_3 x^3 + b_2 x^2 + b_1 x^1 + b_0 x^0 \qquad\qquad (8)$$

The product P of two degree-d polynomials A and B is a degree 2d polynomial. The partial products $a_i b_j$ are 2w-bit wide values that can be expressed in terms of two w-bit values as shown in equation (9) below.

$$a_i b_j = P_{ij} = (PijH \times 2^w) + PijL \qquad\qquad (9)$$

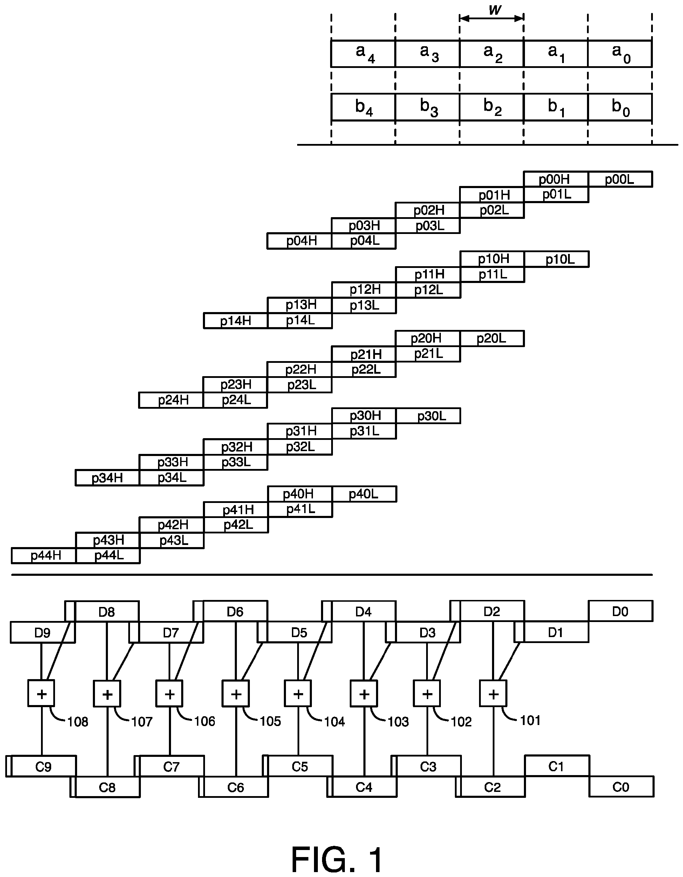

Figure (FIG.) 1 is a diagram that illustrates examples of calculations that can be performed according to equations (3)-(9) to generate partial products for a degree 4 (i.e., $d = 4$) polynomial multiplication. The degree-4 (i.e., $d = 4$) polynomials for A and B from equations (7)-(8) are shown in the upper portion of Figure 1. The partial product alignments for the degree 4 polynomial multiplication of A and B from equation (9) are shown in the middle of Figure 1. For example, ao $\times$ bo = (p00H, pOOL) and, ao $\times$ bi = (p01H, pOIL) ao $\times$ b$_2$ = (p02H, p02L), ... As another example, a$_1$ $\times$ b$_0$ = (p10H, p10L), ao $\times$ bi = (p11H, p11L), ao $\times$ b$_2$ = (p12H, p12L), ... The values p00H, p00L; p01H, pOIL; p02H, p02L; p03H, p03L; ... shown in the middle of FIG. 1 are the partial products of the multiplication of A and B.

Given that $x = 2^w$, the partial product alignments are such that the high partial product $P_{i,j}^H$ overlaps with the low partial product $P_{k,l}^L$, where $k + l = i + j + 1$, and the low partial product $P_{i,j}^L$ overlaps with $P_{m,n}^H$, where $m + n = i + j - 1$. Figure 1 illustrates the alignments of these partial products in 10 vertical columns. Each of these 10 columns of partial products shown in the middle of FIG. 1 contains from 1 to 9 partial product (i.e., sub-product) contributions. The partial product contributions in each of these 10 columns are summed together to generate one of 10 intermediary coefficients D0-D9 that are shown at the bottom of FIG. 1. These intermediary coefficients D0-D9 have widths that range from w bits for D0 to (w + 4) bits for D4. For example, D0 equals p00L, D1 equals p00H + p01L + p10L, D2 = p01H + p02L + p10H + p11L + p20L, D3 = p02H + p03L + p11H + p12L + p20H + p21L + p30L, etc.

Figure 1 also illustrates 8 adders 101-108 that perform 8 addition operations using the intermediary coefficients D0-D9 to generate 10 outputs C0-C9. The adders 101-108 adjust the values of the intermediary coefficients D0-D9 such that the maximum widths of the outputs C0-C9 do not exceed w + 1. The adders 101-108 sum the lower w bits of $D_i$ (i.e., $D_i \bmod 2^w$) with the bits having weights larger than $2^w$ from $D_{i-1}$ ($D_{i-1}$ >> w) to generate a w + 1 bit result in $C_i$. This propagation is only performed for $i \geq 2$, because the least significant column $i = 0$ does not produce any carry-out. For example, adder 101 adds the lower w bits of D2 to the bits of D1 having weights larger than $2^w$ to generate the value of C2. As another example, adder 102 adds the lower w bits of D3 to the bits of D2 having weights larger than $2^w$ to generate the value of C3. Also in FIG. 1, C0 equals D0, and C1 equals the lower w bits of D1. Equation (10) represents the $C_i$ values generated by the adders 101-108 (e.g., C0-C9 in FIG. 1). Equation (11) shows the product P in polynomial form in terms of the $C_i$ values, with $C_i$ containing w+1 bits, and each $C_i$ value overlapping the next value by no more than one bit, as shown at the bottom of FIG 1.

$$C_i = (D_i \bmod 2^w) + (D_{i-1} \gg w), i \in [2, 2d + 1] \qquad\qquad (10)$$

$$P = \sum_{i=0}^{2d+1} C_i x^i \qquad\qquad (11)$$

The second part of the modular multiplication involves reducing P mod N according to equation (12) below, where P is the multiplication output in polynomial form as shown in equation (11).

$$M = P \bmod N \tag{12}$$

Equations (13) and (14) below show two identities used for computing M from the individual C coefficients from equation (11) for a given modulus value N.

$$\alpha + \beta \bmod N \equiv (\alpha \bmod N) + (\beta \bmod N) \tag{13}$$

$$\equiv \left((\alpha \bmod N) + \beta\right) \bmod N \tag{14}$$

The polynomial P can be split into two parts as shown in equation (15) below. This split is then used to apply the identity in equation (14).

$$P = \sum_{i=d+1}^{2d+1} C_i x^i + \sum_{i=0}^{d} C_i x^i \tag{15}$$

The first part of equation (15) corresponding to the $\alpha$ term in equation (14) is composed of $(d + 1)$ radix $2^{w+1}$ digits. For each of these digits from the first part of equation (15), the reduced value mod N can be computed by tabulation, as shown in equation (16) below.

$$M_i = C_i x^i \bmod N, \ i \in [d+1, 2d+1] \tag{16}$$

Additionally, each $M_i$ can be viewed as a degree-d polynomial, with coefficients $M_{i,j}$ radix $2^w$ digits. Therefore, equation (12) can be rewritten using equations (15) and (16) as shown in equation (17) below.

$$M \equiv \sum_{i=0}^{d} \left(C_i + \sum_{j=d+1}^{2d+1} M_{j,i}\right) x^i \bmod N \tag{17}$$

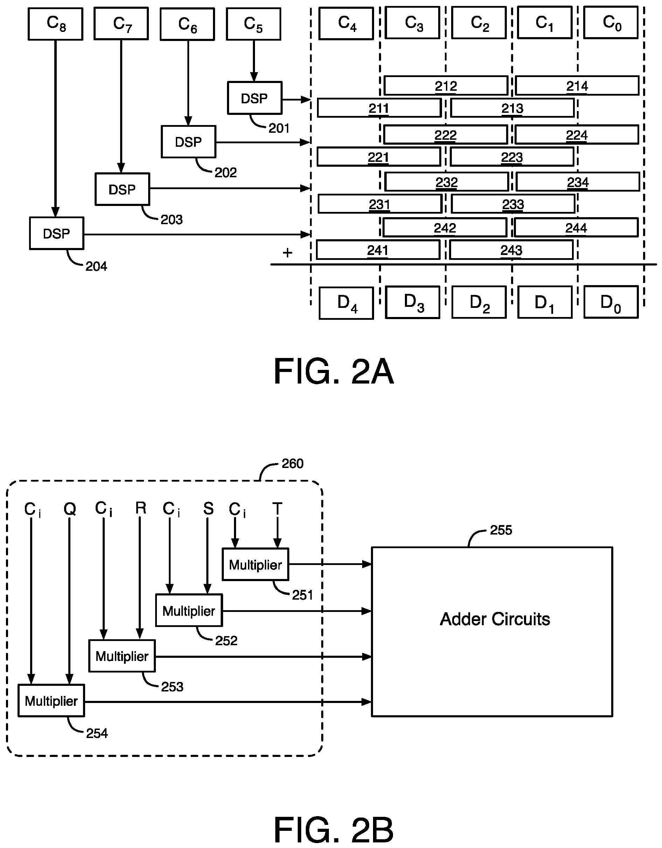

If w is chosen to match the sizes of the multiplier in some circuit architectures, then obtaining $M_i$ by simple table lookup would involve addressing tables with the w+1 bits of $C_i$. In many cases, the resulting tables would be too large to practically implement. An alternative to further decomposing each column of $C_i$ using lookup tables is disclosed herein with respect to Figure 2A.

Figure 2A is a diagram that illustrates an example of a system for performing modular reduction of partial product output terms using digital signal processing (DSP) rows and adders performing column based additions. FIG. 2A illustrates 9 coefficients $C_0$-$C_8$ from equation (11). The coefficients $C_0$-$C_8$ may be, for example, the outputs C0-C8, respectively, of the system of FIG. 1. In the system of FIG. 2A, the reduction of the coefficients $C_i$ having bit positions greater than N is implemented using a multiplicative technique below.

Equation (16) can be rewritten as shown below in equation (18).

$$M_i = C_i\left(x^i \bmod N\right), \ i \in [d+1, 2d+1] \tag{18}$$

Thus, $M_i$ can be calculated as a multiplication of two numbers. Number $C_i$ in equation (18) is an output of the system of FIG. 1. Number ($x^i \bmod N$) in equation (18) is a precomputed constant.

The reduction of the upper coefficients $C_5$-$C_8$ shown in FIG. 2A is implemented using multiplications rather than ROM-based tabulations. The multiplications are implemented using rows of digital signal processing (DSP) blocks. The system of FIG. 2A includes 4 DSP rows 201, 202, 203, and 204. The DSP rows 201-204 receive the values $x^i \bmod N$ as inputs for values of $i$ = 5, 6, 7, and 8, respectively, which are constant values for a constant N. The DSP rows 201-204 also receive as inputs the values of coefficients $C_5$-$C_8$, respectively. DSP rows 201, 202, 203, and 204 include multipliers that multiply the coefficients $C_5$, $C_6$, $C_7$, and $C_8$ by $x^5 \bmod N$, $x^6 \bmod N$, $x^7 \bmod N$, and $x^8 \bmod N$ to generate

products 211-214, 221-224, 231-234, and 241-244, respectively, that are summed with coefficients $C_0$-$C_4$, as shown in FIG. 2A and described in detail below. Figure 2B is a diagram that illustrates a digital signal processing row 260, that is an example of each of the DSP rows 201-204, and adder circuits 255.

The DSP rows 201-204 can include logic circuits (i.e., multiplier circuits) that implement the multipliers. Each of the 4 DSP rows 201-204 can include multiple multiplier circuits that each generate a partial product of the system of FIG. 2A. For example, each of the DSP rows 201-204 can include 4 multiplier circuits 251-254, as shown in FIG. 2B in DSP row 260. By using the multiplier circuits in the DSP rows 201-204 to perform the multiplications, the system of FIG. 2A substantially reduces the amount of logic circuits, uses substantially less circuit area, reduces power consumption, and increases the speed of the calculations (e.g., by 20%) for the modular reduction, compared to a system that uses lookup tables to perform the modular reduction, because the multiplier circuits in the DSP rows can multiply numbers having substantially more bits (e.g., 27 bits) compared to the lookup tables.

According to an exemplary implementation of the system of FIG. 2A, each of the values for $x^i \bmod N$ is a large number (e.g., a number for N having roughly 1000 bits), and each of the DSP rows 201-204 includes two or more multipliers that perform a portion of the multiplication of $C_i$ times ($x^i \bmod N$). For example, each of the DSP rows 201-204 may include 4 multipliers (such as multiplier circuits 251-254 shown in FIG. 2B) that each multiply $C_i$ times a portion of the bits representing ($x^i \bmod N$) to generate a set of bits. According to this example, 4 multiplier circuits 251-254 in DSP row 201 multiply $C_5$ times 4 sets of bits representing ($x^5 \bmod N$) to generate 4 sets of bits 211-214 that represent the product $C_5(x^5 \bmod N)$. Four multiplier circuits 251-254 in DSP row 202 multiply $C_6$ times 4 sets of bits representing $x^6 \bmod N$ to generate 4 sets of bits 221-224 that represent the product $C_6(x^6 \bmod N)$. Four multiplier circuits 251-254 in DSP row 203 multiply $C_7$ times 4 sets of bits representing $x^7 \bmod N$ to generate 4 sets of bits 231-234 that represent the product $C_7(x^7 \bmod N)$. Four multiplier circuits 251-254 in DSP row 204 multiply $x^8 \bmod N$ times 4 sets of bits representing $x^8 \bmod N$ to generate 4 sets of bits 241-244 that represent the product $C_8(x^8 \bmod N)$. In FIG. 2B, $C_i$ represents $C_5$, $C_6$, $C_7$, and $C_8$ in the DSP rows 201-204, respectively, and Q, R, S, and T represent the 4 sets of bits representing ($x^i \bmod N$) in the respective DSP row 201-204. Thus, Q, R, S, and T each represent a different subset of the sequence of bits representing the constant ($x^i \bmod N$). Although each of the 4 DSP rows 201-204 generates 4 sets of bits in the example of FIGS. 2A-2B, systems performing the techniques of FIG. 2A can include any number of DSP rows that separate each constant $x^i \bmod N$ into any number of sets of bits and multiply the sets of bits by $C_i$ to generate a product grouped into the same number of sets of bits.

The bit positions of the sets of bits 211-214, 221-224, 231-234, and 241-244 for each product are based on the corresponding bit positions in the respective 4 sets of bits representing $x^i \bmod N$. For example, the most significant bits (MSBs) 211, 221, 231, and 241 of each product correspond to the MSBs of the corresponding value of $x^i \bmod N$, and the least significant bits (LSBs) 214, 224, 234, and 244 of each product correspond to the LSBs of the corresponding value of $x^i \bmod N$. Each of the 16 sets of bits 211-214, 221-224, 231-234, and 241-244 is vertically aligned with the coefficients $C_0$, $C_1$, $C_2$, $C_3$, and $C_4$ as shown by the vertical dashed lines in FIG. 2A. The most significant bits (MSBs) of each product are vertically aligned with $C_3$, and the least significant bits (LSBs) of each product are vertically aligned with $C_0$.

The system of FIG. 2A includes adders, such as adder circuits 255 shown in FIG. 2B, that then add together the values in each of the 5 columns delineated by the dashed vertical lines in FIG. 2A to generate 5 sums $D_0$, $D_1$, $D_2$, $D_3$, and $D_4$. For example, $C_0$ and the LSBs of the sets of bits 214, 224, 234, and 244 are added together by adder circuits 255 to generate the sum $D_0$. $C_1$, the MSBs of the sets of bits 214, 224, 234, and 244, and the LSBs of the sets of bits 213, 223, 233, and 243 are added together by adder circuits 255 to generate the sum $D_1$. $C_2$, the MSBs of the sets of bits 213, 223, 233, and 243, and the LSBs of the sets of bits 212, 222, 232, and 242 are added together by adder circuits 255 to generate the sum $D_2$. $C_3$, the MSBs of the sets of bits 212, 222, 232, and 242, and the LSBs of the sets of bits 211, 221, 231, and 241 are added together by adder circuits 255 to generate the sum $D_3$. $C_4$ and the MSBs of the sets of bits 211, 221, 231, and 241 are added together by adder circuits 255 to generate the sum $D_4$.

Algorithm 1 is provided below that describes the computation of the constants ($x^i \bmod N$) used by the DSP-based multipliers in the system of FIG. 2A. The Algorithm 1 returns the set of constants as a matrix, where each row of the matrix corresponds to one such constant. The number of columns in the matrix equals $d_N + 1$, where $d_N$ is the polynomial degree corresponding to the modulus N. Denoting by $d_C$ the polynomial degree of C, the number of computed rows is $L = d_C - d_N - 1$. The columns of the matrix correspond to the $2^{(w*i)}$ polynomial coefficient alignments. In Algorithm 1 below, the "inttopoly" function returns an equivalent polynomial number representation for the given binary representation.

1. Input: Modulus N
2. Output: Precomputed DSP coefficients $Coef[L][d_N]$
3. for $i$ from $d_N + 2$ to $d_C$ do
4. $T(x) = $ inttopoly($2^{w*i}$ (mod N))
5. for $j$ from 0 to $d_N$ do

6. *Coef [i-(d_N + 2)][j] = Tj*
7. end for
8. end for

Algorithm 2 provided below describes the modular reduction operation mechanism of the system of FIG. 2A.

Input: $C(x) = A(x) \cdot B(x)$, where

$$C(x) = \sum_{i=0}^{dC} C_i \cdot x^i, 0 \leqslant C_i < 2^{w+1}$$

Input: $Coef[L][d_N]$

Output: $Res(x) = \sum_{i=0}^{dN+1} Res_i \cdot x^i, 0 \leq Res_i < 2^{d+1}$

for $i$ from 0 to $-d_N+1$ do

$\quad$ $D_i = C_i$

end for

for $i$ from $d_N + 2$ to $d_C$ do

$\quad$ for $j$ from 0 to $-d_N$ do

$\quad\quad$ $D_j = D_j + C_i \cdot Coef[i - (d_N + 2)][j]$

$\quad$ end for

end for

for $i$ from 0 to $d_N + 1$ do

$\quad$ $Res_i = 0$

end for

for $i$ from 0 to $-d_N$ do

$\quad$ $Res_i = Res_i + D_{iL}$ $\qquad\qquad\qquad\qquad$ {where $D_i = (D_{iH}, D_{iL})$}

$\quad$ $Res_{i+1} = Res_{i+1} + D_{iH}$

end for

$$Res_{d_N+1} = Res_{d_N+1} + D_{d_N+1}$$

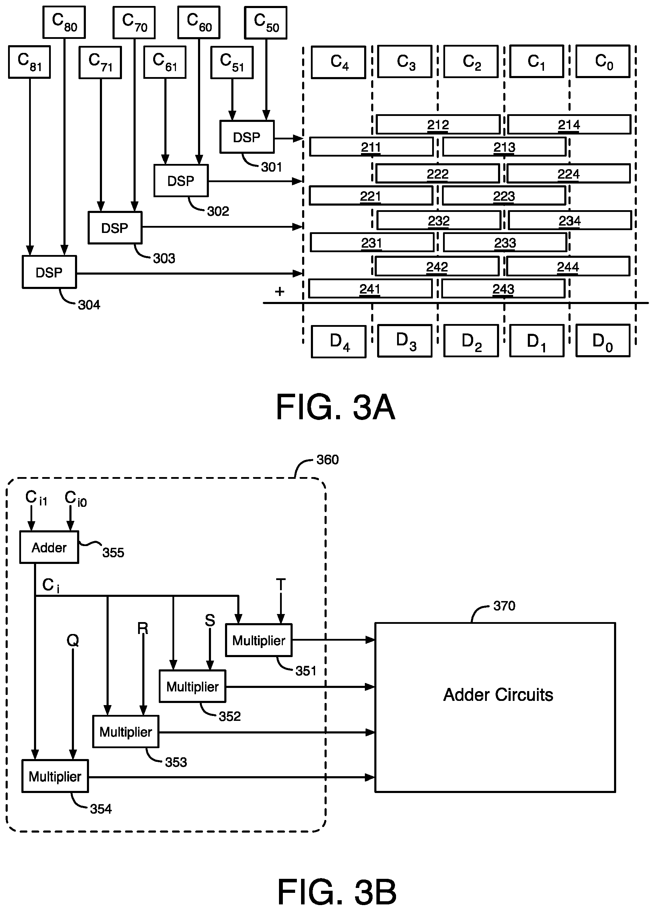

Figure 3A is a diagram that illustrates another example of a system for performing modular reduction of partial product output terms using DSP rows and adders performing column-based additions. The system of FIG. 3A processes 9 coefficients Co-$C_8$ from equation (17). The coefficients $C_0$-$C_8$ may be the values C0-C8, respectively, from the system of FIG. 1. In the system of FIG. 3A, each of the coefficients $C_5$, $C_6$, $C_7$, and $C_8$ is represented by the unevaluated sum of two terms. Coefficient $C_5$ is represented by terms $C_{50}$ and $C_{51}$. Coefficient $C_6$ is represented by terms $C_{60}$ and $C_{61}$. Coefficient $C_7$ is represented by terms $C_{70}$ and $C_{71}$. Coefficient $C_8$ is represented by terms $C_{80}$ and $C_{81}$.

As with the system of FIG. 2A, the reduction of the coefficients $C_i$ having bit positions greater than N is implemented using the DSP-based technique. Thus, the reduction of the upper coefficients corresponding to the terms $C_{50}$, $C_{51}$, $C_{60}$, $C_{61}$, $C_{70}$, $C_{71}$, $C_{80}$, and $C_{81}$ is implemented using the DSP-based technique. The system of FIG. 3A includes 4 DSP rows 301, 302, 303, and 304. Each of the 4 DSP rows 301-304 includes an adder (e.g., an adder circuit) and 4 multipliers (e.g., one or more multiplier circuits). Figure 3B is a diagram that illustrates a DSP row 360, that is an example of each of the DSP rows 301-304, and adder circuits 370.

As shown in FIG. 3B, the DSP row 360 that is an example of each of the DSP rows 301-304 includes 4 multiplier circuits 351-354 and an adder circuit 355. The adder circuits 355 in the DSP rows 301, 302, 303, and 304 can, for example, perform the additions of the adders 104, 105, 106, and 107, respectively, of FIG. 1, by adding together terms $C_{i0}$ and $C_{i1}$ to generate $C_i$. In this example, the adder circuit 355 in DSP row 301 adds the lower w bits of D5 to the bits of D4 having weights larger than $2^w$ to generate the value of $C_5$. The adder circuit 355 in DSP row 302 adds the lower w bits of D6 to the bits of D5 having weights larger than $2^w$ to generate the value of $C_6$. The adder circuit 355 in DSP row 303 adds the lower w bits of D7 to the bits of D6 having weights larger than $2^w$ to generate the value of $C_7$. The adder circuit 355 in DSP row 304 adds the lower w bits of D8 to the bits of D7 having weights larger than $2^w$ to generate the value of $C_8$.

The multiplier circuits 351-354 in DSP rows 301-304 then perform the multiplications described above with respect to the system of FIG. 2A. The 4 multiplier circuits 351-354 in DSP row 301 multiply $C_5$ times 4 sets of bits representing $x^5 \bmod N$ to generate the 4 sets of bits 211-214 that represent the product $C_5 x^5 \bmod N$. The 4 multiplier circuits 351-354 in DSP row 302 multiply $C_6$ times 4 sets of bits representing $x^6 \bmod N$ to generate the 4 sets of bits 221-224 that represent the product $C_6 x^6 \bmod N$. The 4 multiplier circuits 351-354 in DSP row 303 multiply $C_7$ times 4 sets of bits representing $x^7 \bmod N$ to generate the 4 sets of bits 231-234 that represent the product $C_7 x^7 \bmod N$. The 4 multiplier circuits 351-354 in DSP row 304 multiply $C_8$ times 4 sets of bits representing $x^8 \bmod N$ to generate the 4 sets of bits 241-244 that represent the product $C_8 x^8 \bmod N$. The system of FIG. 3A includes adder circuits, such as adder circuits 370 shown in FIG. 3B, that add together the values in each of the 5 columns delineated by the dashed vertical lines in FIG. 3A to generate 5 sums $D_0$, $D_1$, $D_2$, $D_3$, and $D_4$, as described above with respect to FIG. 2A.

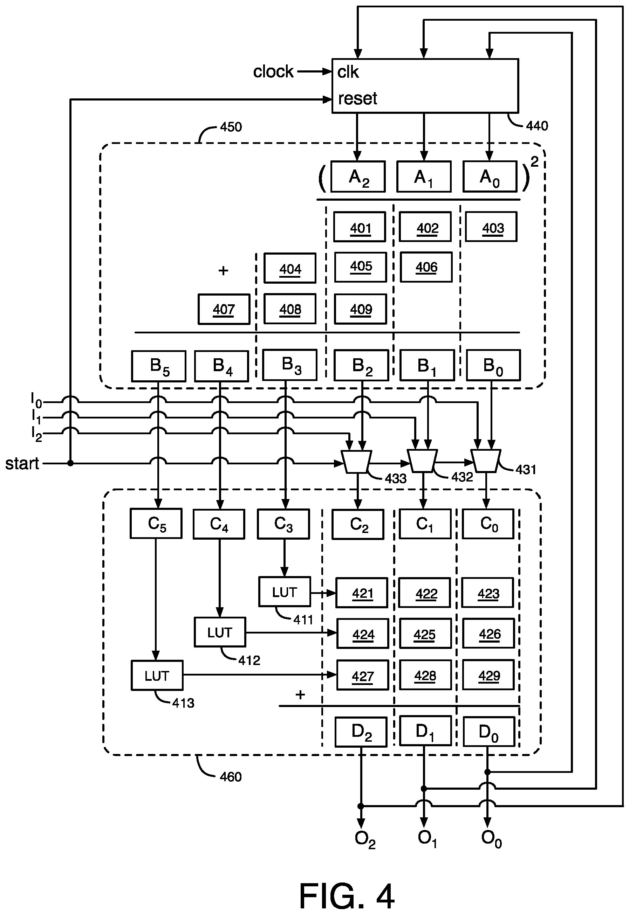

A modular exponentiation system can be constructed using the modular multiplication disclosed herein with respect to FIG. 1. Figure 4 is a diagram that illustrates an example of a system for performing modular exponentiation according to equation (2). In the implementation of the modular exponentiation system shown in FIG. 4, the degree $d$ of the polynomial equals 3 for the purpose of illustration. However, it should be understood that the degree $d$ can be equal to any value in other implementations. In the example of FIG. 4, the input argument P is input as $3w$ width segments of bits I (i.e., $I_0$, $I_1$, and $I_2$). The segments of bits $I_0$, $I_1$, and $I_2$ are provided as inputs to input multiplexers 431-433, respectively. In the system of FIG. 4, the input multiplexers 431-433 are placed between the upper half 450 of the multiplicative expansion and the modular reduction portion 460 of the modular multiplication, because the longest path in the modular multiplication goes through the reduction lookup tables 411-413, which are described below. Placing the input multiplexers 431-433 between upper half 450 and modular reduction portion 460 significantly reduces the latency of the modular exponentiation performed by the system of FIG. 4, because the values $C_0$, $C_1$, and $C_2$ output by the multiplexers 431-433, respectively, do not address the lookup tables 411-413. Placing the input multiplexers 431-433 between upper half 450 and modular reduction portion 460 does not add any additional delay to the system of FIG. 4. The upper half 450 of the multiplicative expansion can be implemented by logic circuitry, such as multiplier circuits and adder circuits. The modular reduction portion 460 of the modular multiplication can also be implemented by logic circuitry, such as lookup table circuits 411-413 and adder circuits. Further details of the operation of the system of FIG. 4 are described below.

In the system of FIG. 4, an input number A represented as three segments of bits (i.e., $A_0$, $A_1$, $A_2$) is provided from a register block 440 to the upper half 450. A start signal is provided to the select inputs of the multiplexers 431-433 and to a reset input of register block 440. Initially, the start signal is asserted, resetting register block 440. In response to register block 440 being reset by the start signal, the segments of bits $A_0$, $A_1$, $A_2$ and the output values $B_0$, $B_1$, $B_2$, $B_3$, $B_4$, and $B_5$ of upper half 450 are reset to zero. Also, in response to the start signal being asserted, the multiplexers 431, 432, and 433 provide the values of $I_0$, $I_1$, and $I_2$ to the modular reduction portion 460 as $C_0$, $C_1$, and $C_2$, respectively. The values of $B_3$, $B_4$, and $B_5$ are provided to the modular reduction portion 460 as $C_3$, $C_4$, and $C_5$, respectively. The start signal is then de-asserted.

The values of $C_3$, $C_4$, and $C_5$ are provided to inputs of lookup tables 411, 412, and 413, respectively. Lookup tables (LUTs) 411, 412, and 413 output the values of $C_i \times x^i \bmod N$ as segments of bits 421-423, 424-426, and 427-429 in response to the values of $C_3$, $C_4$, and $C_5$, respectively. For example, LUT 411 outputs the value of $C_3 \times x^3 \bmod N$ as 3 segments of bits 421, 422, and 423. LUT 412 outputs the value of $C_4 \times x^4 \bmod N$ as 3 segments of bits 424, 425, and 426. LUT 413 outputs the value of $C_5 \times x^5 \bmod N$ as 3 segments of bits 427, 428, and 429.

The system of FIG. 4 includes adders that add together the values indicated by the segments of bits in each of the 3 columns delineated by the dashed vertical lines in modular reduction portion 460 to generate 3 sums $D_0$, $D_1$, and $D_2$. For example, the values indicated by the segments of bits 423, 426, and 429 and $C_0$ are added together to generate $D_0$. The values indicated by the segments of bits 422, 425, and 428 and $C_1$ are added together to generate $D_1$. The values indicated by the segments of bits 421, 424, and 427 and $C_2$ are added together to generate $D_2$. The values of $D_0$, $D_1$, and $D_2$ are output as $O_0$, $O_1$, and $O_2$, respectively. The values of $O_0$, $O_1$, and $O_2$ are provided as inputs to register block 440. Register block 440 provides the values of $O_0$, $O_1$, and $O_2$ to upper half 450 as $A_0$, $A_1$, and $A_2$, respectively, in response to a clock signal received at a clock (clk) input in each iteration of the modular exponentiation.

The upper half 450 then performs a multiplicative expansion of $(A_0, A_1, A_2)^2$ to produce 9 partial products 401-409, as shown in FIG. 4. The partial products 401-409 are added together by adders in respective columns that are delineated by the dashed vertical lines in upper half 450 to generate 2d segments of bits $B_0$, $B_1$, $B_2$, $B_3$, $B_4$, and $B_5$. For example, partial product 403 is provided as $B_0$. The sum of partial products 402 and 406 is provided as $B_1$. The sum of partial products 401, 405, and 409 is provided as $B_2$. The sum of partial products 404 and 408 is provided as $B_3$. Partial product 407 is provided as $B_4$, with bits overflowing to $B_5$.

In response to the start signal being de-asserted, the input multiplexers 431, 432, and 433 provide the values of $B_0$, $B_1$, and $B_2$ to modular reduction portion 460 as $C_0$, $C_1$, and $C_2$, respectively. The values of $B_3$, $B_4$, and $B_5$ are provided to the modular reduction portion 460 as $C_3$, $C_4$, and $C_5$, respectively. Subsequently, lookup tables 411, 412, and 413 provide the values of $C_i \times x^i \bmod N$ as segments of bits 421-423, 424-426, and 427-429 in response to the values of $C_3$, $C_4$, and $C_5$, respectively, as described above. The values in the 3 columns are then summed together by adders to generate the values of $D_0$, $D_1$, and $D_2$, as described above. The values of $D_0$, $D_1$, and $D_2$ are output as $O_0$, $O_1$, and $O_2$, respectively. The output values $O_0$, $O_1$, and $O_2$ are successively squared by upper half 450 and portion 460 until the modular exponentiation is computed.

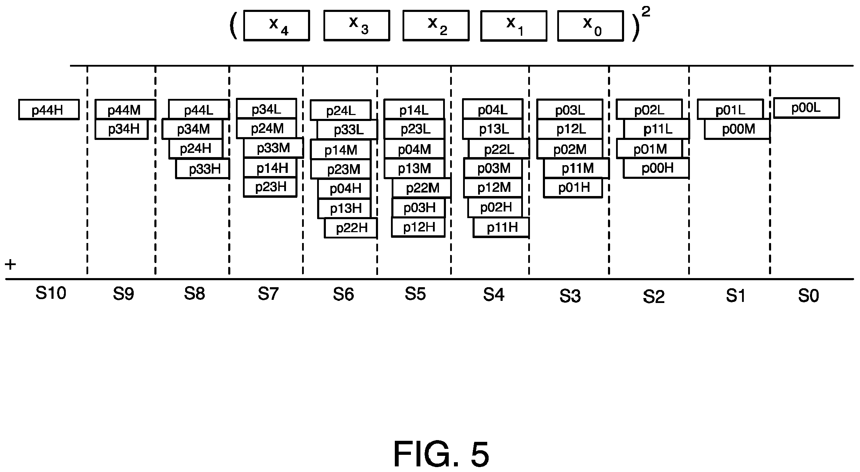

According to another example of modular multiplication, the multiplicative expansion is optimized to take advantage of the squaring operation in the modular exponentiation to reduce the number of adder tree addends. Figure 5 illustrates an example of a system for performing multiplicative expansion for a squaring operation in modular exponentiation. In the example of FIG. 5, an input value X is squared to generate a product that is represented by 11 segments S0-S10 of bits (i.e., $X^2$ = S0-S10). The squaring operation of FIG. 5 can, for example, be used to implement $C^E$ in equation (2), where C = X. The product S0-S10 of $X^2$ can, for example, be provided as an input to the modular reduction system of FIG. 2A or FIG. 3A or as an input to the modular reduction portion 460 of FIG. 4 for modular exponentiation.

In the system of FIG. 5, the input value X is separated into 5 segments of binary bits $x_0$, $x_1$, $x_2$, $x_3$, and $x_4$, which correspond to a degree-4 polynomial. The 5 segments of bits of X are squared, which is shown as $(x_0, x_1, x_2, x_3,$ and $x_4)^2$ in FIG. 5. To perform the squaring operation of input value X, each of the 5 segments of bits $x_0$, $x_1$, $x_2$, $x_3$, and $x_4$ is multiplied by each of the 5 segments of bits $x_0$, $x_1$, $x_2$, $x_3$, and $x_4$ to generate 2w+2-bit wide partial products (e.g., using multiplier circuits). Each of these partial products is represented as three segments of binary bits $P_l + P_m + P_h$. The $P_1$ and $P_m$ segments have w-bits, whereas the $P_h$ segment is 2 bits wide. These segments of bits $P_l + P_m + P_h$ for the partial products of $x_i$ times $x_j$ are identified in FIG. 5 as rectangles that are labeled as pijH, pijM, and pijL, respectively, where the indices i and j are values from 0 to 4. As an example, the product of $x_0$ times $x_0$ is a partial product having three segments of bits that are identified as p00L, p00M, and p00H in FIG. 5. As other examples, the products of $x_1$ times $x_1$, $x_2$ times $x_2$, $x_3$ times $x_3$, and $x_4$ times $x_4$ are partial products each having three segments of bits identified as p11L/p11M/p11H, p22L/p22M/p22H, p33L/p33M/p33H, and p44L/p44M/p44H, respectively, in FIG. 5.

The segments of bits that equal the partial products of $(x_0, x_1, x_2, x_3,$ and $x_4)^2$ are arranged in 11 columns that are delineated in FIG. 5 by vertical dotted lines that are aligned based on width w. The 3 segments of bits for each partial product (e.g., p00L, p00M, and p00H) are arranged in 3 separate columns. Then, w-bit adder trees (e.g., implemented by adder circuits) perform column-based additions on the segments of bits in the 11 columns to generate the 11 sums S0-S10, which are shown in FIG. 5. The bit segments in each column are added together as addends by the adder trees to generate one of the sums S0-S10. For example, bit segments p03L, p12L, p02M, p11M, and p01H are added together to generate sum S3. As another example, bit segments p04L, p13L, p22L, p03M, p12M, p02H, and p11H are added together to generate sum S4.

Some of the partial product values generated by squaring $(x_0, x_1, x_2, x_3,$ and $x_4)^2$ have the same values. For example, $x_0 \times x_1 = x_1 \times x_0$. Therefore, the value represented by the three segments of bits pOIL, p01M, and p01H equals the value represented by the three segments of bits p10L, p10M, and p10H, respectively. As another example, $x_1 \times x_2 = x_2 \times x_1$. Therefore, value represented by the three segments of bits p12L, p12M, and p12H equals the value represented by the three segments of bits p21L, p21M, and p21H, respectively.

Instead of calculating the partial products that have the same values twice, the system of FIG. 5 calculates only one of these duplicate partial products and then doubles the duplicate partial product value to generate a doubled partial product represented by 3 segments of bits arranged in 3 of the columns shown in FIG. 5. This operation of doubling the duplicate partial product value involves left shifting the 3 segments of bits by one binary bit position with respect to the unshifted partial product value. The system of FIG. 5 then adds the partial products in the respective columns to generate the sums S0-S10, without calculating the other duplicate partial products.

For example, the system of FIG. 5 doubles the partial product represented by the 3 segments of bits pOIL, p01M, and p01H. Multiplying the partial product represented by bits pOIL, p01M, and p01H by 2 equals the sum of ($x_0 \times x_1$) + ($x_1 \times x_0$). By doubling the partial product represented by bits p01L, p01M, and p01H, the system of FIG. 5 does not need to calculate the product of $x_1 \times x_0$ (i.e., the partial product represented by bit segments p10L, p10M, p10H). The system of FIG. 5 then adds the doubled partial product represented by bits pOIL, p01M, and p01H in the 3 respective columns to generate the 3 sums. This technique causes a significant reduction in the number of addends in the adder tree represented by the columns of bit segments shown in FIG. 5, which significantly reduces the latency of the system.

The system of FIG. 5 can double one of each duplicate partial product to generate a doubled partial product by bit shifting each duplicate partial product one bit position to the left. The system of FIG. 5 can perform a bit shift to double one of each duplicate partial product by transmitting each K bit position of a duplicate partial product stored in a first register to a K+1 bit position in a second register. As another example, the system of FIG. 5 can perform the bit shift to double one of each duplicate partial product using, for example, a shift register. In FIG. 5, the doubled partial products that have been bit shifted to the left by 1-bit position are represented as segments of bits (in rectangles) that are shifted to the left of the corresponding vertical dotted line on the right side of the respective column. In FIG. 5, the 10 doubled partial products that have been bit shifted to the left by 1-bit position are represented by bit segments pOIL, p01M, p01H, p02L, p02M, p02H, p03L, p03M, p03H, p04L, p04M, p04H, p12L, p12M, p12H, p13L, p13M, p13H, p14L, p14M, p14H, p23L, p23M, p23H, p24L, p24M, p24H, p34L, p34M, and p34H.

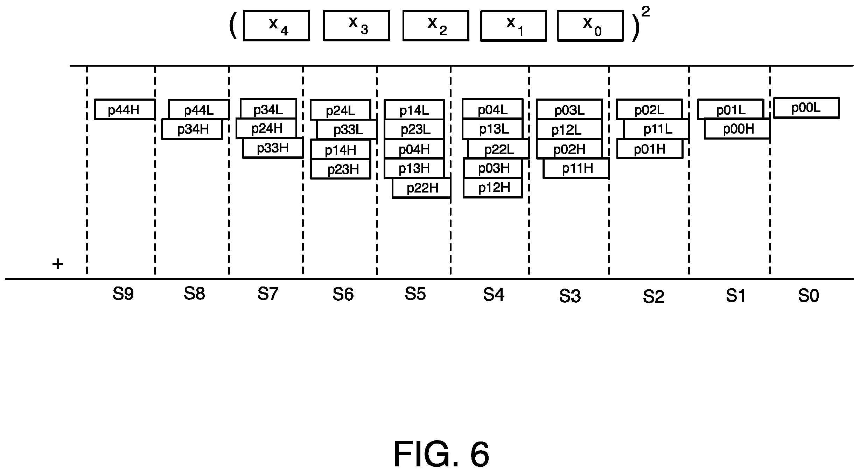

Figure 6 illustrates an example of a system for performing multiplicative expansion for a squaring operation in modular exponentiation. In the example of FIG. 6, an input value X is squared to generate a product that is represented by 10 segments S0-S9 of bits (i.e., $X^2$ = S0-S9). The input value X is separated into 5 segments of binary bits $x_0$, $x_1$, $x_2$, $x_3$, and $x_4$. The product S0-S9 of ($x_0$, $x_1$, $x_2$, $x_3$, and $x_4$)$^2$ can, for example, be provided as an input to the modular reduction system of FIG. 2A or FIG. 3A or as an input to the modular reduction portion 460 of FIG. 4 for modular exponentiation. The squaring of input value X can, for example, be performed by multiplier circuits.

In the example of FIG. 6, each of the partial products of ($x_0$, $x_1$, $x_2$, $x_3$, and $x_4$)$^2$ is represented as only two segments $P_l$ and $P_h$ of binary bits (e.g., p01L and p01H), instead of 3 segments of bits. The lower segment $P_l$ of bits is w-bits wide, and the upper segment $P_h$ of bits is (w + 2)-bits wide. The segments of bits that equal the partial products of ($x_0$, $x_1$, $x_2$, $x_3$, and $x_4$)$^2$ are arranged in 10 columns that are delineated in FIG. 6 by vertical dotted lines. The 2 segments of bits $P_l$ and $P_h$ for each partial product (e.g., p00L and p00H) are arranged in 2 separate columns. The segments of bits in the 10 columns are addends that are added together in each column using adder trees to generate the 10 sums S0-S9 shown in FIG. 5. The system of FIG. 6 uses (w + 2)-bits wide adder trees to sum the addends in the columns. In the system of FIG. 6, the adder tree bit-widths are only 2 bits greater than in the system of FIG. 5, but the number of addends in the adder trees are reduced by 33% compared to the system of FIG. 5. This optimization reduces the delay of the adder trees, while further reducing the logic area and the maximum frequency of the system of FIG. 6. The adder trees can, for example, be implemented by adder circuits.

As with the system of FIG. 5, the system of FIG. 6 doubles one of each duplicate partial product by bit shifting each of the bit segments for the duplicate partial product to the left by one bit. The doubled partial products that have been bit shifted to the left by 1-bit are represented as segments of bits (in rectangles) that are shifted to the left of the corresponding vertical dotted line on the right side of the respective column in FIG. 6.

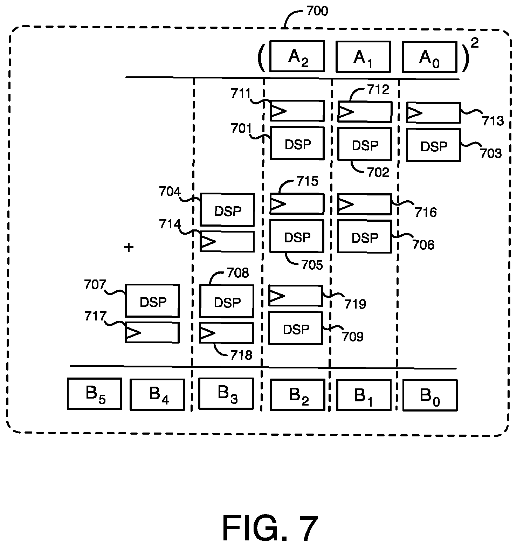

Figure 7 is a diagram that illustrates an example of a system that uses multiplicative expansion with digital signal processing (DSP) blocks and registers. In the example of FIG. 7, the system includes an upper half 700 of the multiplicative expansion that can, for example, replace the upper half 450 of the multiplicative expansion in the system of FIG. 4. The upper half 700 of the multiplicative expansion of FIG. 7 can be used with the other portions of the system of FIG. 4 including modular reduction portion 460, multiplexers 431-433, and register block 440. In the example of FIG. 7, the upper half 700 of the multiplicative expansion includes 9 DSP blocks 701-709 and 9 registers 711-719 (e.g., flip-flop circuits) that are used to perform a squaring operation ($A_0$, $A_1$, and $A_2$)$^2$, where $A_0$, $A_1$, and $A_2$ are segments of bits of an input number A. The registers 711-719 function as sequential storage circuits that store values in response to clock signals.

The DSP blocks 701-709 include multipliers (e.g., multiplier circuits) that perform polynomial multiplication of the $A_0$, $A_1$, and $A_2$ segments of bits to generate partial products of the squaring operation ($A_0$, $A_1$, and $A_2$)$^2$, as described above with respect to FIG. 1. The multipliers shown in FIGS. 2B and 3B are examples of the DSP blocks 701-709. The DSP blocks 701-709 are re-timed by the registers 711-719, respectively, to reduce the number of critical paths, as shown in FIG. 7. The registers 711-719 add pipelining to the DSP blocks 701-709, respectively. The registers 711-719 replace the register block 440 in the system of FIG. 4. Each of the DSP blocks 701-709 has a register coupled to either the input or the output of the DSP block. For example, registers 711, 712, 713, 715, 716, and 719 are coupled to the inputs of DSP blocks 701, 702, 703, 705, 706, and 709, respectively, because DSP blocks 701, 702, 703, 705, 706, and 709 are not on the critical paths. Registers 714, 717, and 718 are coupled to the outputs of DSP blocks 704, 707, and 708, respectively, because the DSP blocks 704, 707, and 708 are on the critical paths. The registers 714, 717, and 718 reduce the delays on these critical paths. Placing the registers 714, 717, and 718 after the DSP blocks 704, 707, and 708 inserts a pipeline stage between these DSP blocks and the LUTs 411-413 shown in FIG. 4. The registers 711-719 only add a single pipeline stage in each iteration of the multiplications.

Although the rank order of DSP blocks 701-709 is shown in a column format in FIG. 7, each DSP block 701-709 is accessed in parallel, and the rank orders are summed afterwards. Thus, the products of the multiplications performed by the DSP blocks 701-709 are summed in columns delineated by the dotted lines shown in FIG. 7 to generate the sums $B_0$, $B_1$, $B_2$, $B_3$, $B_4$, and $B_5$ (e.g., using adder circuits). $B_5$ may include overflow bits from $B_4$. The latency for the addition in each column may be, for example, a single cycle. The sums $B_0$, $B_1$, $B_2$, $B_3$, $B_4$, and $B_5$ are provided to the modular reduction portion 460 as disclosed herein with respect to FIG. 4.

According to other examples, the delay of the blocks used to implement modular multiplication can be reduced by subdividing the $w$-wide digits into k bytes (where $w = w_1 + ... + w_k$) and composing k adder trees per digit (i.e., one adder tree per byte). In these examples, $w_i$ must be large enough so that $w_i \geq \log d$, where $d$ is the maximum adder tree depth. In an exemplary implementation that is not intended to be limiting, $k = 3$, and $w_i = 9$. According to one exemplary architecture, sliced adder trees are used in the upper half of the multiplicative expansion (e.g., upper half 450 or 700). According to another exemplary architecture, sliced adder trees are used in both the upper half of the multiplicative expansion and in the modular reduction portion of the modular multiplication (e.g., portion 460 or the portions shown in FIGS. 2A or 3A).

According to further examples, the DSP row based modular reduction structure shown in FIGS. 2A and 3A can be further optimized. Because the DSP rows in FIGS. 2A and 3A are used to implement constant multipliers, long zero-runs within the constants can be optimized by explicitly removing a number of multipliers, as well as the following tables. This optimization can have a small, but useful effect on both the logic circuit resource usage (e.g., a reduction of 1% in logic circuits and 2% in DSP blocks) and the performance of the system.

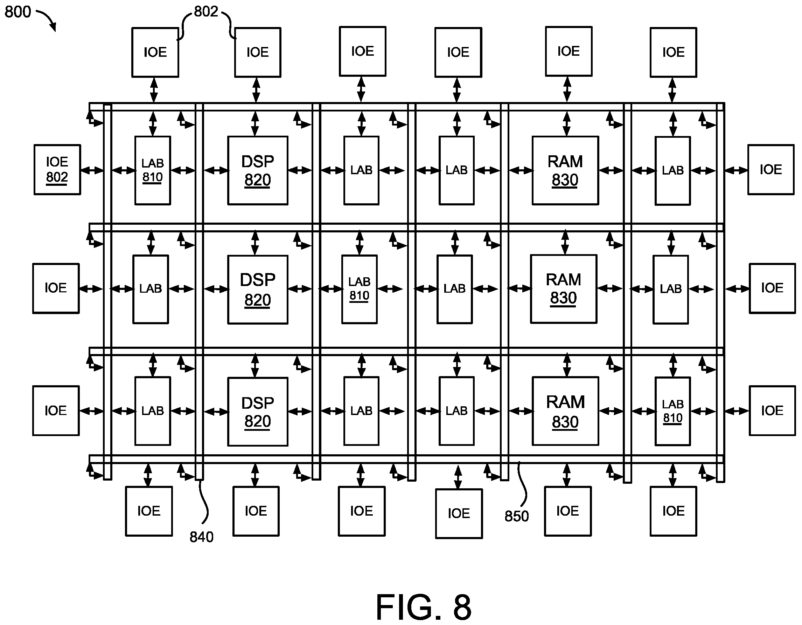

Figure 8 is a diagram of an illustrative example of a programmable integrated circuit (IC) 800 that can be configured to implement any one or more of the systems disclosed herein. As shown in FIG. 8, the programmable integrated circuit 800 may include a two-dimensional array of functional blocks, including logic array blocks (LABs) 810 and other functional blocks, such as random access memory (RAM) blocks 830 and digital signal processing (DSP) blocks 820, for example. Functional blocks, such as LABs 810, may include smaller programmable regions (e.g., logic elements, configurable logic blocks, or adaptive logic modules) that receive input signals and perform custom functions on the input signals to produce output signals. One or more of DSP blocks 820 can be in the DSP rows and/or DSP blocks disclosed herein with respect to FIGS. 2A, 3A, and 7. The LABs 810 and/or the DSP blocks 820 can include multiplier circuits, bit shifter circuits, and/or adders circuits that are used, for example, to implement the multipliers, multiplications, additions, adders, and/or bit shifting disclosed herein with respect to any one or more of FIGS. 1, 2A, 2B, 3A, 3B, 4, 5, 6, and/or 7.

In addition, the programmable integrated circuit 800 may have input/output elements (IOEs) 802 for driving signals off of programmable integrated circuit 800 and for receiving signals from other devices. Input/output elements 802 may include parallel input/output circuitry, serial data transceiver circuitry, differential receiver and transmitter circuitry, or other circuitry used to connect one integrated circuit to another integrated circuit. As shown, input/output elements 802 may be located around the periphery of the IC. If desired, the programmable integrated circuit 800 may have input/output elements 802 arranged in different ways. For example, input/output elements 802 may form one or more columns of input/output elements that may be located anywhere on the programmable integrated circuit 800 (e.g., distributed evenly across the width of the programmable integrated circuit). If desired, input/output elements 802 may form one or more rows of input/output elements (e.g., distributed across the height of the programmable integrated circuit). Alternatively, input/output elements 802 may form islands of input/output elements that may be distributed over the surface of the programmable integrated circuit 800 or clustered in selected areas.

The programmable integrated circuit 800 may also include programmable interconnect circuitry in the form of vertical routing channels 840 (i.e., interconnects formed along a vertical axis of programmable integrated circuit 800) and horizontal routing channels 850 (i.e., interconnects formed along a horizontal axis of programmable integrated circuit 800), each routing channel including at least one track to route at least one wire.

Note that other routing topologies, besides the topology of the interconnect circuitry depicted in FIG. 8, may be used. For example, the routing topology may include wires that travel diagonally or that travel horizontally and vertically along different parts of their extent as well as wires that are perpendicular to the device plane in the case of three dimensional integrated circuits, and the driver of a wire may be located at a different point than one end of a wire. The routing topology may include global wires that span substantially all of programmable integrated circuit 800, fractional global wires such as wires that span part of programmable integrated circuit 800, staggered wires of a particular length, smaller local wires, or any other suitable interconnection resource arrangement.

Furthermore, it should be understood that examples disclosed herein may be implemented in any type of integrated circuit. If desired, the functional blocks of such an integrated circuit may be arranged in more levels or layers in which multiple functional blocks are interconnected to form still larger blocks. Other device arrangements may use functional blocks that are not arranged in rows and columns.

Programmable integrated circuit 800 may contain programmable memory elements. Memory elements may be loaded with configuration data (also called programming data) using input/output elements (IOEs) 802. Once loaded, the memory elements each provide a corresponding static control signal that controls the operation of an associated functional block (e.g., LABs 810, DSP 820, RAM 830, or input/output elements 802).

In a typical scenario, the outputs of the loaded memory elements are applied to the gates of field-effect transistors in a functional block to turn certain transistors on or off and thereby configure the logic in the functional block including the routing paths. Programmable logic circuit elements that may be controlled in this way include parts of multiplexers (e.g., multiplexers used for forming routing paths in interconnect circuits), look-up tables, logic arrays, AND, OR, NAND, and NOR logic gates, pass gates, etc.

The memory elements may use any suitable volatile and/or non-volatile memory structures such as random-access-memory (RAM) cells, fuses, antifuses, programmable read-only-memory memory cells, mask-programmed and laser-programmed structures, combinations of these structures, etc. Because the memory elements are loaded with configuration data during programming, the memory elements are sometimes referred to as configuration memory or programmable memory elements.

The programmable memory elements may be organized in a configuration memory array consisting of rows and columns. A data register that spans across all columns and an address register that spans across all rows may receive configuration data. The configuration data may be shifted onto the data register. When the appropriate address register is asserted, the data register writes the configuration data to the configuration memory elements of the row that was designated by the address register.

Programmable integrated circuit 800 may include configuration memory that is organized in sectors, whereby a sector may include the configuration RAM bits that specify the function and/or interconnections of the subcomponents and wires in or crossing that sector. Each sector may include separate data and address registers.

In general, software and data for performing any of the functions disclosed herein may be stored in non-transitory computer readable storage media. Non-transitory computer readable storage media is tangible computer readable storage media that stores data for later access, as opposed to media that only transmits propagating electrical signals (e.g., wires). The software code may sometimes be referred to as software, data, program instructions, instructions, or code. The non-transitory computer readable storage media may, for example, include computer memory chips, non-volatile memory such as non-volatile random-access memory (NVRAM), one or more hard drives (e.g., magnetic drives or solid state drives), one or more removable flash drives or other removable media, compact discs (CDs), digital versatile discs (DVDs), Blu-ray discs (BDs), other optical media, and floppy diskettes, tapes, or any other suitable memory or storage device(s).

One or more specific examples are described herein. In an effort to provide a concise description of these examples, not all features of an actual implementation are described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

Additional examples are now described. Example 1 is a circuit system for performing modular reduction of a modular multiplication, the circuit system comprising: multiplier circuits that receive a first subset of coefficients that are generated by summing partial products of a multiplication operation that is part of the modular multiplication, wherein the multiplier circuits multiply the coefficients in the first subset by constants that equal remainders of divisions to generate products; and first adder circuits that add a second subset of the coefficients and segments of bits of the products that are aligned with respective ones of the second subset of the coefficients to generate sums.

In Example 2, the circuit system of Example 1 further comprises: second adder circuits, wherein each of the second adder circuits adds together two sets of bits that are each generated by summing portions of at least two of the partial products of the multiplication operation to generate one of the coefficients in the first subset.

In Example 3, the circuit system of any one of Examples 1-2 may optionally include, wherein the multiplier circuits are in digital signal processing blocks in an integrated circuit.

In Example 4, the circuit system of any one of Examples 1-3 may optionally include, wherein the multiplier circuits are arranged in subsets, and wherein the multiplier circuits in each of the subsets multiply one of the coefficients in the first subset by one of the constants that equals a remainder of one of the divisions to generate one of the products.

In Example 5, the circuit system of any one of Examples 1-4 may optionally include, wherein each of the multiplier circuits multiplies one of the coefficients in the first subset by a subset of bits that represent one of the constants to generate one of the segments of bits representing one of the products.

In Example 6, the circuit system of Example 5 may optionally include, wherein the first adder circuits add each of the coefficients in the second subset to portions of the segments of bits representing each one of the products to generate one of the sums.

In Example 7, the circuit system of any one of Examples 1-6 may optionally include, wherein the first adder circuits generate each of the sums by adding together one of the coefficients in the second subset and a subset of the segments of bits representing each of the products generated by the multiplier circuits.

Example 8 is a circuit system comprising: first logic circuitry for performing multiplicative expansion for modular multiplication to generate sums of partial products; second logic circuitry for performing modular reduction of the modular multiplication to generate output values; and multiplexers for providing input values to the second logic circuitry during a first iteration of the modular reduction, wherein the output values of the modular reduction are provided to the first logic circuitry for performing the multiplicative expansion to generate the sums of the partial products, and wherein the multiplexers provide at least a subset of the sums of the partial products to the second logic circuitry during a second iteration of the modular reduction.

In Example 9, the circuit system of Example 8 may optionally include, wherein the second logic circuitry provides the input values as the output values during the first iteration of the modular reduction.

In Example 10, the circuit system of any one of Examples 8-9 may optionally include, wherein the second logic circuitry comprises lookup tables that generate constant values in response to receiving a first subset of the sums of the partial products during the second iteration, and wherein the second logic circuitry adds the constant values provided from the lookup tables to a second subset of the sums of the partial products received through the multiplexers to generate the output values during the second iteration.

In Example 11, the circuit system of any one of Examples 8-10 may optionally include, wherein the first logic circuitry squares a number represented by the output values to generate the sums of the partial products during the second iteration.

In Example 12, the circuit system of any one of Examples 8-11 may optionally include, wherein the multiplexers select between the input values and at least the subset of the sums of the partial products in response to a start signal.

In Example 13, the circuit system of Example 10 may optionally include, wherein each of the lookup tables outputs one of the constant values as multiple segments of bits, and wherein the second logic circuitry adds one of the segments of bits for each of the constant values to one of the sums of the partial products in the second subset to generate each of the output values.

Example 14 is a circuit system comprising: first logic circuitry for performing multiplicative expansion for modular exponentiation of an input number represented as first segments of bits to generate partial products represented as second segments of bits, wherein the first logic circuitry generates the partial products by multiplying together the first segments of bits, wherein the first logic circuitry causes at least one of the partial products to equal twice a product of a first one of the first segments of bits multiplied by a second one of the first segments of bits; and second logic circuitry for adding together groups of the second segments of bits representing the partial products to generate sums.

In Example 15, the circuit system of Example 14 may optionally include, wherein the first logic circuitry generates each of the partial products as at least two of the second segments of bits, and wherein the second logic circuitry adds the at least two of the second segments of bits for each of the partial products in different ones of the groups to generate the sums.

In Example 16, the circuit system of any one of Examples 14-15 further comprises: third logic circuitry for bit shifting each of the partial products in a subset of the partial products to generate a doubled partial product that equals twice one of the partial products in the subset.

In Example 17, the circuit system of any one of Examples 14-16 further comprises: third logic circuitry for multiplying a first subset of the sums by constants that equal remainders of divisions to generate products and to add a second subset of the sums and third segments of bits representing the products that are aligned with respective ones of the second subset of the sums.

Example 18 is a circuit system comprising: multiplier circuits for performing a squaring operation for modular exponentiation of an input number represented as first segments of bits to generate partial products represented as second segments of bits, wherein each of the multiplier circuits generates one of the second segments of bits by multiplying at least one of the first segments of bits; first storage circuits for storing subsets of the first segments of bits provided as inputs to a first subset of the multiplier circuits that are outside critical paths in the modular exponentiation; and second storage circuits for storing subsets of the second segments of bits generated by a second subset of the multiplier circuits that are in the critical paths of the modular exponentiation.

In Example 19, the circuit system of Example 18 further comprises: adder circuits for adding together groups of the second segments of bits generated by the multiplier circuits to generate sums, wherein each of the groups of the second segments of bits are added together based on an alignment determined by which of the first segments of bits are multiplied to generate the second segments of bits in each of the groups.

In Example 20, the circuit system of any one of Examples 18-19 may optionally include, wherein the multiplier circuits are in digital signal processing blocks in a programmable logic integrated circuit.

In Example 21, the circuit system of any one of Examples 18-20 may optionally include, wherein each of the first storage circuits and each of the second storage circuits is a sequential circuit responsive to a clock signal.

In Example 22, the circuit system of any one of Examples 18-21 may optionally include, wherein an embedded function has either the first storage circuits or the second storage circuits enabled, depending on where a logical depth of the embedded function is located in the circuit system.

Example 23 is a method for performing modular reduction of a modular multiplication, the method comprises: receiving a first subset of coefficients that are generated by summing partial products of a multiplication operation that is part of the modular multiplication; multiplying the coefficients in the first subset by constants that equal remainders of divisions using multiplier circuits to generate products; and adding a second subset of the coefficients and segments of bits of the products that are aligned with respective ones of the second subset of the coefficients using first adder circuits to generate sums.

In Example 24, the method of Example 23 further comprises: adding together sets of bits that are each generated by summing portions of a subset of the partial products of the multiplication operation using second adder circuits to generate the coefficients in the first subset.

In Example 25, the method of any one of Examples 23-24 may optionally include, wherein multiplying the coefficients in the first subset by the constants further comprises multiplying each of the coefficients in the first subset by one of the constants that equals a remainder of one of the divisions to generate one of the products.

In Example 26, the method of any one of Examples 23-25 may optionally include, wherein multiplying the coefficients in the first subset by the constants further comprises multiplying one of the coefficients in the first subset by a subset of bits that represent one of the constants to generate one of the segments of bits representing a portion of one of the products.

In Example 27, the method of Example 26 may optionally include, wherein adding the second subset of the coefficients and the segments of bits of the products further comprises adding each of the coefficients in the second subset to unique subsets of the segments of bits representing each one of the products to generate one of the sums.

Example 28 is a method for modular multiplication comprising: providing input values to first logic circuitry during a first iteration using multiplexer circuits; providing output values of the first logic circuitry to second logic circuitry; performing multiplicative expansion for the modular multiplication to generate sums of partial products using the second logic circuitry; providing at least a subset of the sums of the partial products to the first logic circuitry using the multiplexer circuits during a second iteration; and performing modular reduction of the modular multiplication using the sums of the partial products to generate the output values using the first logic circuitry.

In Example 29, the method of Example 28 further comprises: providing the input values as the output values using the first logic circuitry during the first iteration.

In Example 30, the method of any one of Examples 28-29 may optionally include, wherein performing the modular reduction to generate the output values further comprises generating constant values from lookup tables in the first logic circuitry in response to receiving a first subset of the sums of the partial products during the second iteration; and adding the constant values provided from the lookup tables to a second subset of the sums of the partial products received through the multiplexer circuits to generate the output values during the second iteration using adder circuits in the first logic circuitry.

In Example 31, the method of Example 30 may optionally include, wherein generating the constant values from the lookup tables comprises generating each of the constant values as multiple segments of bits; and adding one of the segments of bits for each of the constant values to one of the sums of the partial products in the second subset to generate one of the output values.

In Example 32, the method of any one of Examples 28-31 may optionally include, wherein performing the multiplicative expansion for the modular multiplication further comprises squaring a number represented by the output values to generate the sums of the partial products during the second iteration.

In Example 33, the method of any one of Examples 28-32 may optionally include, wherein providing the input values to the first logic circuitry during the first iteration comprises selecting between the input values and at least the subset of the sums of the partial products in response to a start signal using the multiplexer circuits.

Example 34 is a method comprising: performing multiplicative expansion for modular exponentiation of an input number represented as first segments of bits by multiplying together the first segments of bits to generate partial products represented as second segments of bits using first logic circuitry; causing at least one of the partial products to equal twice a product of a first one of the first segments of bits multiplied by a second one of the first segments of bits using the first logic circuitry; and adding together groups of the second segments of bits representing the partial products to generate sums using second logic circuitry.

In Example 35, the method of Example 34 may optionally include, wherein performing the multiplicative expansion for the modular exponentiation comprises generating each of the partial products as at least two of the second segments of bits, and wherein each of the at least two of the second segments of bits is grouped into separate ones of the groups.

In Example 36, the method of Example 35 may optionally include, wherein adding together the groups of the second segments of bits comprises adding together the second segments of bits in each of the groups to generate one of the sums.

In Example 37, the method of any one of Examples 34-36 may optionally include, wherein causing at least one of the partial products to equal twice the product of the first one of the first segments of bits multiplied by the second one of the first segments of bits comprises bit shifting the at least one of the partial products to generate a doubled partial product that equals twice the product of the first one of the first segments of bits multiplied by the second one of the first segments of bits.

In Example 38, the method of any one of Examples 34-36, may optionally include, wherein causing at least one of the partial products to equal twice the product of the first one of the first segments of bits multiplied by the second one of the first segments of bits comprises bit shifting each of the partial products in a subset of the partial products to generate a doubled partial product that equals twice one of the partial products in the subset.

Example 39 is a method comprising: performing a squaring operation for modular exponentiation of an input number represented as first segments of bits to generate partial products represented as second segments of bits using multiplier circuits; storing subsets of the first segments of bits provided as inputs to a first subset of the multiplier circuits that are outside critical paths in the modular exponentiation in first storage circuits; and storing subsets of the second segments of bits generated by a second subset of the multiplier circuits that are in the critical paths of the modular exponentiation in second storage circuits.

In Example 40, the method of Example 39 further comprises: adding groups of the second segments of bits using adder circuits to generate sums by adding each of the groups of the second segments of bits based on an alignment determined by which of the first segments of bits are multiplied to generate the second segments of bits in each of the groups.

In Example 41, the method of any one of Examples 39-40 may optionally include, wherein the multiplier circuits are in digital signal processing blocks in a programmable logic integrated circuit.

In Example 42, the method of any one of Examples 39-41 may optionally include, wherein each of the first storage circuits and each of the second storage circuits is a sequential circuit responsive to a clock signal.

The foregoing description of the examples has been presented for the purpose of illustration. The foregoing description is not intended to be exhaustive or to be limiting to the examples disclosed herein. In some instances, features of the examples can be employed without a corresponding use of other features as set forth. Many modifications, substitutions, and variations are possible in light of the above teachings.

## Claims

1. A circuit system for performing modular reduction of a modular multiplication, the circuit system comprising:

   multiplier circuits that receive a first subset of coefficients that are generated by summing partial products of a multiplication operation that is part of the modular multiplication, wherein the multiplier circuits multiply the coefficients in the first subset by constants that equal remainders of divisions to generate products; and
   first adder circuits that add a second subset of the coefficients and segments of bits of the products that are aligned with respective ones of the second subset of the coefficients to generate sums.

2. The circuit system of claim 1 further comprises:
   second adder circuits, wherein each of the second adder circuits adds together two sets of bits that are each generated by summing portions of at least two of the partial products of the multiplication operation to generate one of the coefficients in the first subset.

3. The circuit system of any one of claims 1-2, wherein the multiplier circuits are in digital signal processing blocks in an integrated circuit.

4. The circuit system of any one of claims 1-3, wherein the multiplier circuits are arranged in subsets, and wherein the multiplier circuits in each of the subsets multiply one of the coefficients in the first subset by one of the constants that equals a remainder of one of the divisions to generate one of the products.

5. The circuit system of any one of claims 1-4, wherein each of the multiplier circuits multiplies one of the coefficients in the first subset by a subset of bits that represent one of the constants to generate one of the segments of bits representing one of the products.

6. The circuit system of claim 5, wherein the first adder circuits add each of the coefficients in second subset to

**EP 4 195 029 A1**

portions of the segments of bits representing each one of the products to generate one of the sums.

7. The circuit system of any one of claims 1-6, wherein the first adder circuits generate each of the sums by adding together one of the coefficients in the second subset and a subset of the segments of bits representing each of the products generated by the multiplier circuits.

8. A method for performing modular reduction of a modular multiplication, the method comprises:

   receiving a first subset of coefficients that are generated by summing partial products of a multiplication operation that is part of the modular multiplication;
   multiplying the coefficients in the first subset by constants that equal remainders of divisions using multiplier circuits to generate products; and
   adding a second subset of the coefficients and segments of bits of the products that are aligned with respective ones of the second subset of the coefficients using first adder circuits to generate sums.

9. The method of claim 8 further comprises:
   adding together sets of bits that are each generated by summing portions of a subset of the partial products of the multiplication operation using second adder circuits to generate the coefficients in the first subset.

10. The method of any one of claims 8-9, wherein multiplying the coefficients in the first subset by the constants further comprises multiplying each of the coefficients in the first subset by one of the constants that equals a remainder of one of the divisions to generate one of the products.

11. The method of any one of claims 8-10, wherein multiplying the coefficients in the first subset by the constants further comprises multiplying one of the coefficients in the first subset by a subset of bits that represent one of the constants to generate one of the segments of bits representing a portion of one of the products.

12. The method of Example 11, wherein adding the second subset of the coefficients and the segments of bits of the products further comprises adding each of the coefficients in the second subset to unique subsets of the segments of bits representing each one of the products to generate one of the sums.

13. The method of any one of claims 8-9, wherein the multiplier circuits are in digital signal processing blocks in an integrated circuit.

14. The method of any one of claims 8-13, wherein the first adder circuits generate each of the sums by adding together one of the coefficients in the second subset and a subset of the segments of bits representing each of the products generated by the multiplier circuits.

FIG. 1

| C₈ | C₇ | C₆ | C₅ | | C₄ | C₃ | C₂ | C₁ | C₀ |

FIG. 2A

FIG. 2B

FIG. 3A

FIG. 3B

FIG. 4

EP 4 195 029 A1

$$\left( \boxed{x_4} \ \boxed{x_3} \ \boxed{x_2} \ \boxed{x_1} \ \boxed{x_0} \right)^2$$

| S10 | S9 | S8 | S7 | S6 | S5 | S4 | S3 | S2 | S1 | S0 |
|-----|-----|-----|-----|-----|-----|-----|-----|-----|-----|-----|
| p44H | p44M | p44L | p34L | p24L | p14L | p04L | p03L | p02L | p01L | p00L |
| | p34H | p34M | p24M | p33L | p23L | p13L | p12L | p11L | p00M | |
| | | p24H | p33M | p14M | p04M | p22L | p02M | p01M | | |
| | | p33H | p14H | p23M | p13M | p03M | p11M | p00H | | |
| | | | p23H | p04H | p22M | p12M | p01H | | | |
| | | | | p13H | p03H | p02H | | | | |
| | | | | p22H | p12H | p11H | | | | |

+

FIG. 5

$$\left( \boxed{x_4} \quad \boxed{x_3} \quad \boxed{x_2} \quad \boxed{x_1} \quad \boxed{x_0} \right)^2$$

| | | | | | | | | | |
|---|---|---|---|---|---|---|---|---|---|
| p44H | p44L | p34L | p24L | p14L | p04L | p03L | p02L | p01L | p00L |
| | p34H | p24H | p33L | p23L | p13L | p12L | p11L | p00H | |
| | | p33H | p14H | p04H | p22L | p02H | p01H | | |
| | | | p23H | p13H | p03H | p11H | | | |
| | | | p22H | p12H | | | | | |

+

| S9 | S8 | S7 | S6 | S5 | S4 | S3 | S2 | S1 | S0 |

# FIG. 6

22

FIG. 7

FIG. 8

EP 4 195 029 A1

Europäisches
Patentamt

European
Patent Office

Office européen
des brevets

# EUROPEAN SEARCH REPORT

Application Number

EP 22 20 4889

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,P | LANGHAMMER MARTIN ET AL: "Low-Latency Modular Exponentiation for FPGAs", 2022 IEEE 30TH ANNUAL INTERNATIONAL SYMPOSIUM ON FIELD-PROGRAMMABLE CUSTOM COMPUTING MACHINES (FCCM), IEEE, 15 May 2022 (2022-05-15), pages 1-9, XP034131033, DOI: 10.1109/FCCM53951.2022.9786090 [retrieved on 2022-06-03] * the whole document * ----- | 1-14 | INV. G06F7/72 |
| X | OZTURK ERDINC: "Design and Implementation of a Low-Latency Modular Multiplication Algorithm", IEEE TRANSACTIONS ON CIRCUITS AND SYSTEMS I: REGULAR PAPERS, vol. 67, no. 6, 1 June 2020 (2020-06-01), pages 1902-1911, XP093040380, US ISSN: 1549-8328, DOI: 10.1109/TCSI.2020.2966755 Retrieved from the Internet: URL:https://ieeexplore.ieee.org/stampPDF/g etPDF.jsp?tp=&arnumber=8968620&ref=aHR0cHM 6Ly9pZWVleHBsb3JlLmllZWUub3JnL2Fic3RyYWN0L 2RvY3VtZW50Lzg5Njg2MjA=> * abstract * * figures 2, 3, 4 * * Sections V, VI * * Algorithms 3-9 * ----- | 1-14 | |
| X | US 2021/117157 A1 (LANGHAMMER MARTIN [GB] ET AL) 22 April 2021 (2021-04-22) * paragraphs [0028] - [0042]; figures 3-6 * ----- | 1-14 | TECHNICAL FIELDS SEARCHED (IPC) G06F |

The present search report has been drawn up for all claims

| Place of search | Date of completion of the search | Examiner |
|---|---|---|
| Munich | 24 April 2023 | Winkelbauer, Andreas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 20 4889

This annex lists the patent family members relating to the patent documents cited in the above-mentioned European search report.
The members are as contained in the European Patent Office EDP file on
The European Patent Office is in no way liable for these particulars which are merely given for the purpose of information.

24-04-2023

| Patent document cited in search report | | Publication date | Patent family member(s) | | Publication date |
|---|---|---|---|---|---|
| US 2021117157 | A1 | 22-04-2021 | CN 114675804 | A | 28-06-2022 |
| | | | EP 4020165 | A1 | 29-06-2022 |
| | | | JP 2022101472 | A | 06-07-2022 |
| | | | US 2021117157 | A1 | 22-04-2021 |

For more details about this annex : see Official Journal of the European Patent Office, No. 12/82

**EP 4 195 029 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63287896